# EUROPÄISCHE PATENTANMELDUNG

(11) **EP 4 624 109 A1**
(43) Veröffentlichungstag der Anmeldung: **01.10.2025**
(21) Anmeldenummer: 25160993.9
(22) Anmeldetag: 28.02.2025
(51) Int. Cl.: B25J 9/16

(54) **VERFAHREN ZUM HANDHABEN EINES GREIFOBJEKTES MITTELS EINER HANDHABUNGSANLAGE, SOWIE HANDHABUNGSANLAGE UND ENDEFFEKTOR**

(30) Priorität: 25.03.2024 DE 102024108378
(71) Anmelder: J. Schmalz GmbH, 72293 Glatten (DE)
(72) Erfinder: Schaaf, Walter, 72250 Freudenstadt-Grüntal (DE)
(74) Vertreter: DREISS Patentanwälte PartG mbB

(57) **Zusammenfassung**

Die Erfindung betrifft ein Verfahren zum Handhaben eines Greifobjektes (18) mittels einer Handhabungsanlage (10), umfassend eine Greifvorrichtung (16) zum Greifen des Greifobjektes, einen Manipulator (14) zum Verlagern der Greifvorrichtung, und eine Oberflächen-Charakterisierungseinrichtung (22) zum Charakterisieren einer Oberflächentopographie des Greifobjektes, das Verfahren umfassend Kontaktieren des Greifobjektes an einer Initialposition, Charakterisieren einer Oberflächentopographie des Greifobjektes in einem Referenzbereich (38) der Oberfläche (28) des Greifobjektes, Ablegen des Greifobjektes an einem Ablageort, und Wiederaufgreifen des Greifobjektes, wobei das Wiederaufgreifen das Wiederauffinden des Referenzbereichs und das Ausrichten der Greifvorrichtung (12) relativ zu dem Referenzbereich umfasst. Die Erfindung betrifft auch eine Handhabungsanlage und einen Endeffektor.

## Beschreibung

Die Erfindung betrifft ein Verfahren zum Handhaben eines Greifobjekts mittels einer Handhabungsanlage umfassend eine Greifvorrichtung zum Greifen des Greifobjekts und einen Manipulator zum Verlagern der Greifvorrichtung. Die Erfindung betrifft auch eine solche Handhabungsanlage sowie einen Endeffektor umfassend eine Greifvorrichtung.

Handhabungsanlagen sind aus dem Stand der Technik in vielfältiger Art und Weise bekannt und finden beispielsweise in Produktionsumgebungen Verwendung, um Werkstücke zwischen zwei Lagerorten oder einem Lagerort und einer Bearbeitungsmaschine zu transportieren. Derartige Handhabungsvorgänge umfassen üblicherweise das Greifen des Werkstücks (bspw. aus einem Lagerort), das Ablegen des Werkstücks (bspw. an einem anderen Lagerort oder an einer Bearbeitungsstation einer Bearbeitungsmaschine) und das anschließende erneute Wiederaufnehmen des Werkstücks (bspw. um es aus dem Lagerort einem Verpackungsprozess zuzuführen oder nach erfolgter Bearbeitung in der Bearbeitungsmaschine einem Lagerort zuzuführen).

Bei dem erneuten Aufnehmen des Werkstücks besteht oftmals das Problem, dass das Werkstück nicht mehr an der exakt gleichen Position gegriffen wird, was in bestimmten Anwendungssituationen zu Problemen führen kann, bspw. dann, wenn das Werkstück mehrere aufeinanderfolgende Bearbeitungsprozesse durchlaufen soll.

Um diesem Problem zu begegnen, wurde vorgeschlagen, das Werkstück in eine zentrierende Vorrichtung abzulegen oder mit optischer Sensorik eine Kontur oder Geometrie des Werkstücks zu erfassen, um somit ein positionsgenaues Wiederaufnehmen des Werkstücks zu ermöglichen. Alternativ ist es auch bekannt, das Werkstück während eines Bearbeitungsprozesses mittels des Manipulators und des Endeffektors zu halten und den Manipulator einer Bewegung des Werkstücks während der Bearbeitung nachzuführen.

Die bekannten Lösungen sind jedoch entweder wenig flexibel oder erfordern eine aufwändige Steuerung und Überwachung durch kosten- und wartungsintensive Sensorik.

Die Erfindung beschäftigt sich mit der Aufgabe, Greifobjekte auf einfache und kostengünstige Weise positionsgenau wieder aufzunehmen.

Diese Aufgabe wird erfindungsgemäß durch ein Verfahren mit den Merkmalen des Anspruchs 1 gelöst. Hierbei handelt es sich um ein Verfahren zum Handhaben eines Greifobjekts, insbesondere Werkstücks, mittels einer Handhabungsanlage. Das Verfahren ist insofern auch ein Verfahren zum Betreiben einer Handhabungsanlage.

Die Handhabungsanlage umfasst eine Greifvorrichtung zum Greifen eines Greifobjekts. Die Handhabungsanlage umfasst außerdem einen Manipulator, insbesondere Roboter, zum Verlagern der Greifvorrichtung. Die Greifvorrichtung kann über eine Kopplungseinrichtung mit dem Manipulator verbunden sein. Die Handhabungsanlage umfasst außerdem eine Oberflächen-Charakterisierungseinrichtung zum Charakterisieren einer Oberflächentopographie (im vorliegenden Zusammenhang alternativ auch Oberflächentopologie genannt) des Greifobjektes. Die Oberflächen-Charakterisierungseinrichtung kann eine Erfassungseinheit zum Erfassen einer Oberfläche des Greifobjektes und eine Auswerteeinheit zum Auswerten von Signalen der Erfassungseinheit aufweisen. Die Oberflächen-Charakterisierungseinrichtung kann von dem Manipulator verlagerbar sein. Die Oberflächen-Charakterisierungseinrichtung kann auch ortsfest relativ zu dem Manipulator angeordnet sein. Vorzugsweise ist die Oberflächen-Charakterisierungseinrichtung an der Greifvorrichtung angeordnet und insbesondere fest mit dieser verbunden.

Weitere optionale Ausgestaltungen und Vorteile der Handhabungsanlage zum Ausführen des erfindungsgemäßen Verfahrens sind nachfolgend unter Bezugnahme auf die Handhabungsanlage als solche beschrieben, sodass zur Vermeidung von Wiederholungen auf untenstehende Offenbarung hierzu verwiesen wird.

Das Verfahren umfasst die folgenden Schritte, insbesondere in der nachfolgend angegebenen Reihenfolge:
- Kontaktieren, insbesondere Greifen, des Greifobjekts an einer Initialposition mittels der Greifvorrichtung.
- Charakterisieren einer Oberflächentopographie des Greifobjektes in einem Referenzbereich der Oberfläche des Greifobjektes mittels der Oberflächen-Charakterisierungseinrichtung;
- Ablegen des Greifobjektes an einem Ablageort.
- Wiederaufgreifen des Greifobjektes von dem Ablageort oder von einem davon verschiedenen Aufnahmeort. Der Prozess des Wiederaufgreifens des Greifobjektes umfasst das Ausrichten der Greifvorrichtung relativ zu dem Greifobjekt, um das Greifobjekt an der gleichen Greifposition wie beim vorherigen Greifern (Initialposition) aufzugreifen. Nach erfolgter Ausrichtung wird das Greifobjekt mittels der Greifvorrichtung gegriffen. Das Ausrichten der Greifvorrichtung umfasst das Wiederauffinden des Referenzbereichs. Zu diesem Zweck wird zumindest ein Teilbereich der Oberfläche erneut mittels der der Oberflächen-Charakterisierungseinrichtung charakterisiert. Hierzu kann die Greifvorrichtung zuvor mittels des Manipulators (wieder) in die Nähe des Greifobjektes, insbesondere in die Nähe der Initialposition, verlagert worden sein. Nach dem Wiederauffinden des Referenzbereichs kann die Greifvorrichtung relativ zu dem (wiederaufgefundenen) Referenzbereich ausgerichtet werden, insbesondere um das Greifobjekt an der gleichen Greifposition wie beim vorherigen Greifern (Initialposition) aufzugreifen. Es ist auch denkbar, dass das Wiederauffinden des Referenzbereichs (Charakterisieren der Oberflächentopographie) und das Ausrichten der Greifvorrichtung gleichzeitig erfolgt, bspw. in dem die Greifvorrichtung gemeinsam mit der Oberflächen-Charakterisierungseinrichtung relativ zu dem Greifobjekt verlagert wird, insbesondere die Oberfläche des Greifobjektes abrastert.

Bei dem vorgeschlagenen Verfahren erfolgt insofern eine Wiedererkennung einer Initialposition anhand einer charakteristischen Oberflächentopographie des Greifobjekts in einem Referenzbereich. Der Referenzbereich dient als geometrische Referenz zur positionsgenauen Greifpunktermittlung für die erneute Aufnahme des Greifobjekts. Dies ermöglicht es, auf einfache konstruktive Weise ein Greifobjekt an der gleichen Position erneut aufzugreifen.

Zum Greifen des Greifobjekts kann die Greifvorrichtung beispielsweise von dem Manipulator auf das Greifobjekt aufgesetzt werden und danach eine Greifwirkung der Greifvorrichtung aktiviert werden. Es ist möglich, dass das Greifobjekt mittels der Greifvorrichtung zunächst nur kontaktiert wird, dann die Oberflächentopographie in dem Referenzbereich charakterisiert wird und erst danach eine Greifwirkung der Greifvorrichtung aktiviert wird. Es ist auch denkbar, dass das Greifobjekt gegriffen wird und danach die die Oberflächentopographie in dem Referenzbereich charakterisiert wird.

Im vorliegenden Zusammenhang mein "Initialposition" nicht zwingend eine absolut erste Greifposition der Greifvorrichtung auf dem Greifobjekt, sondern bezeichnet diejenige Greifposition, an welcher das Greifobjekt im weiteren Verfahrensverlauf erneut aufgegriffen werden soll.

Das Charakterisieren der Oberflächentopographie kann insbesondere das Detektieren bzw. Messen der Oberflächentopographie der Oberfläche des Greifobjektes umfassen.

Position und Lage des Referenzbereichs können durch eine Lage der Oberflächen-Charakterisierungseinrichtung relativ zu der Greifvorrichtung definiert sein. Insbesondere kann die Oberflächen-Charakterisierungseinrichtung ortsfest relativ zu der Greifvorrichtung angeordnet sein. Der Referenzbereich kann in seiner lateralen Ausdehnung durch einen Aufnahmebereich der Oberflächen-Charakterisierungseinrichtung bestimmt sein.

Das Ablegen des Greifobjekts umfasst insbesondere das Trennen von Greifobjekt und Greifvorrichtung. Zuvor kann das Greifobjekt (nach dem Greifen durch die Greifvorrichtung) mittels des Manipulators zu dem Ablageort verlagert worden sein. Insofern kann zwischen dem Aufnehmen des Greifobjektes mittels der Greifvorrichtung und dem Ablegen des Greifobjekts an dem Ablageort eine Verlagerung des Greifobjekts (bzw. der Greifvorrichtung und des damit gegriffenen Greifobjekts) zu dem Ablageort erfolgen. Der Ablageort kann insofern von dem ursprünglichen Aufnahmeort verschieden sein. Der Ablageort kann aber auch dem ursprünglichen Aufnahmeort entsprechen.

Das Charakterisieren der Oberflächentopographie des Greifobjektes kann vor, während und/oder nach einer optionalen Verlagerung des Greifobjekts zu dem Ablageort erfolgen. Bei dem Ablageort kann es sich beispielsweise um eine Bearbeitungsstation einer Bearbeitungsanlage oder einen Lagerort für das Greifobjekt handeln.

Der (Wieder-)Aufnahmeort kann dem Ablageort entsprechen (bspw. ein Lagerort in einem Greifobjekt-Zwischenlager). Der (Wieder-)Aufnahmeort kann auch von dem Ablageort verschieden sein. Beispielsweise kann der Ablageort ein Zufuhrort einer Bearbeitungsmaschine sein und der Aufnahmeort kann ein Ausgabeort der Bearbeitungsmaschine sein.

Zwischen dem Ablegen des Greifobjekts und dem Wiederaufnehmen des Greifobjekts kann ein Arbeitsprozess mit dem Greifobjekt oder ein Bearbeitungsprozess an dem Greifobjekt durchgeführt werden. Insofern kann das Verfahren zwischen dem Ablegen des Greifobjekts an dem Ablageort und dem Wiederaufnehmen des Greifobjekts das Durchführen eines Arbeitsprozesses mit dem Greifobjekt oder das Durchführen eines Bearbeitungsprozesses an dem Greifobjekt umfassen. Das Durchführen des Arbeitsprozesses oder Bearbeitungsprozesses kann das Überführen des Greifobjektes von dem Ablageort zu einem von dem Ablageort verschiedenen (Wieder-)Aufnahmeort umfassen.

Das Ausrichten der Greifvorrichtung relativ zu dem Referenzbereich kann das Verschieben der Greifvorrichtung parallel zu einer Greifobjektoberfläche, insbesondere mittels des Manipulators, umfassen. Insbesondere kann das Ausrichten derart erfolgen, dass die Greifvorrichtung parallel zu der Oberfläche des Greifobjektes verlagert wird, bis der Referenzbereich in einer vorgegebenen Relativposition zu der Greifvorrichtung angeordnet ist. Befindet sich die Greifvorrichtung bereits in der korrekten Position, um das Greifobjekt an der Initialposition zu greifen, kann das Ausrichten der Greifvorrichtung relativ zu dem Referenzbereich auch das Halten der Greifvorrichtung in der aktuellen Position umfassen.

Unter "Oberflächentopographie" wird vorliegend insbesondere eine Höhenstruktur der Oberfläche des Greifobjektes verstanden. Insbesondere umfasst der Begriff "Oberflächentopographie" Gestaltabweichungen wie sie in der DIN 4760 für technische Oberflächen beschrieben sind. Insofern kann die Oberflächentopographie Gestaltabweichungen verschiedener Ordnungen umfassen (z.B. 1. Ordnung: Formabweichungen, 2. Ordnung: Welligkeit, 3. Ordnung: Rauheit in Form von Rillen, 4. Ordnung: Rauheit in Form von Riefen, Schuppen, Kuppen; 5. Ordnung: Rauheit der Gefügestruktur; 6. Ordnung Gitteraufbau des Werkstoffs).

Das Charakterisieren der Oberflächentopographie kann das Messen verschiedener Oberflächengrößen, insbesondere verschiedener der vorstehend beschriebenen Gestaltabweichungen - alternativ oder kumulativ - umfassen.

Im Rahmen einer vorteilhaften Ausgestaltung kann das Charakterisieren der Oberflächentopographie das Ermitteln einer Welligkeit der Oberfläche des Greifobjektes in dem Referenzbereich umfassen. Unter Welligkeit wird insbesondere eine Abweichung von einer ideal ebenen Oberfläche verstanden, die wiederholt in relativ längeren Intervallen auftritt als die Tiefe. Insbesondere wird unter Welligkeit eine Gestaltabweichung 2. Ordnung im Sinne der DIN 4760 verstanden. Die charakteristische Welligkeit in dem Referenzbereich kann insofern als geometrische Referenz für das Wiederfinden des Referenzbereichs - und somit der Initialposition - dienen. Beispielsweise hat sich eine solche Ausgestaltung als vorteilhaft zum Wiederauffinden einer Greifposition auf Holzoberflächen, insbesondere Holz-Imitaten (bspw. Furnier), mit "Holz-Topologie" herausgestellt. Das Messen einer Welligkeit kann beispielsweise das Abtasten der Oberfläche des Greifobjektes mittels einer Abtasteinrichtung der Oberflächen-Charakterisierungseinrichtung umfassen. Zusätzlich oder alternativ kann das Ermitteln der Welligkeit das Analysieren der Oberfläche des Greifobjektes mittels optischer Messverfahren, bspw. Laser-Scanverfahren, Konfokalmikroskopie und/oder Weißlicht-Interferometrie, umfassen.

Alternativ oder zusätzlich kann das Charakterisieren der Oberfläche das Ermitteln einer Rauheit (auch als Rauigkeit oder Rauhigkeit bezeichnet) der Oberfläche des Greifobjektes in dem Referenzbereich umfassen. Unter Rauheit wird insbesondere eine Rauheit in Form von Rillen (3. Ordnung gemäß DIN 4760), eine Rauheit in Form von Riefen, Schuppen, oder Kuppen (4. Ordnung gemäß DIN 4760) oder eine Rauheit der Gefügestruktur (5. Ordnung gemäß DIN 4760) verstanden. Das Ermitteln der Rauheit kann auch das Ermitteln des Mittenrauwerts *Rₐ*, der quadratischen Rauheit *R_{q}* (RMS) und/oder der gemittelten Rautiefe *R_{z}* umfassen. Das Messen einer Rauheit kann beispielsweise das Abtasten der Oberfläche des Greifobjektes mittels einer Abtasteinrichtung der Oberflächen-Charakterisierungseinrichtung umfassen. Zusätzlich oder alternativ kann das Ermitteln der Rauheit das Analysieren der Oberfläche des Greifobjektes mittels optischer Messverfahren, bspw. mittels Konfokalmikroskopie und/oder Weißlicht-Interferometrie umfassen. Das Wiederauffinden einer Greifposition durch Ermitteln einer Rauheit hat sich beispielsweise beim Greifen von spanend bearbeiteten Teilen (gedreht, gefräst, geschliffen...) aus Metall und Holz (dort insbesondere Rauheit in Form von Rillen / 3. Ordnung und/oder Rauheit in Form von Riefen, Schuppen, Kuppen / 4. Ordnung) oder beim Greifen von makroskopisch "glatten" Objekten mit Rauheitsstruktur aufgrund der Gefügestruktur (dort insbesondere Rauheit der Gefügestruktur / 5. Ordnung) bewährt.

Das Charakterisieren der Oberflächentopographie in dem Referenzbereich kann auch - alternativ oder zusätzlich zu einer Charakterisierung der Welligkeit und/oder Rauheit - das Ermitteln wenigstens eines charakteristischen Topographie-Merkmals der Oberfläche des Greifobjektes in dem Referenzbereich umfassen. Das Wiederaufgreifen des Greifobjektes von dem Ablageort kann dann insbesondere das Wiederauffinden des wenigstens einen Topographie-Merkmals und optional das Ausrichten der Greifvorrichtung relativ zu dem (wiederaufgefundenen) wenigstens einen Topographie-Merkmals umfassen.

Es ist denkbar, dass das Topographie-Material direkt mittels der Oberflächen-Charakterisierungseinrichtung detektiert wird. Es ist auch denkbar, dass zunächst die gesamte Oberflächentopographie in dem Referenzbereich charakterisiert wird und aus den so gewonnenen Topographie-Informationen das Topographie-Merkmal ermittelt wird (bspw. aus Topographie-Daten das wenigstens eine Topographie-Merkmal datentechnisch mittels Methoden der Bildverarbeitung ermittelt wird, siehe unten).

Bei dem Topographie-Merkmal handelt es sich insbesondere um eine lokale Formabweichung der Oberflächengestalt des Greifobjekts. Insbesondere handelt es sich bei dem Topographie-Merkmal um eine Gestaltabweichung 1. Ordnung gemäß DIN 4760. Das Topographie-Merkmal ist insbesondere durch das Material des Greifobjektes gebildet. Das wenigstens eine Topographie-Merkmal kann auch durch Bearbeitung des Greifobjektes erzeugt sein (bspw. maschinell erzeugte Oberflächenstruktur eines Blechs). Das wenigstens eine Topographie-Merkmal kann durch das Material selbst bedingt sein (bspw. Poren in einem Schaummaterial).

Beispielsweise kann es sich bei dem wenigstens einen Topographie-Merkmal um eine lokale Aussparung, Ausnehmung oder Öffnung, z.B. Bohrung oder Durchbruch, in dem Greifobjekt handeln. Die Aussparung, Ausnehmung oder Öffnung können materialbedingt sein (bspw. Poren in einem Schaum) oder durch Bearbeitung erzeugt sein (bspw. Bohrung als Schraubenaufnahme).

Bei dem wenigstens einen Topographie-Merkmal kann es sich auch um eine lokale Erhebung, bspw. Ausstülpung oder Ausbuchtung, an der Oberfläche des Greifobjekts handeln. Die lokale Erhebung kann materialbedingt sein (bspw. Stufe eines Holzmusters) oder durch Bearbeitung in dem Greifobjekt erzeugt sein (bspw. Rillen eines "Tränenblechs"). Die lokale Erhebung kann eine maximale Höhe von 1 mm aufweisen.

Bei dem wenigstens einen Topographie-Merkmal kann es sich auch um ein charakteristisches Oberflächenmuster des Greifobjekts handelt. Beispielsweise kann das Muster aus einer bestimmten Anordnung von Aussparungen und/oder Erhebungen bestehen (bspw. Tränenblech/Riffelblech).

Das Charakterisieren der Oberflächentopographie mittels der Oberflächen-Charakterisierungseinrichtung, insbesondere das Erfassen des wenigstens einen Topographie-Merkmals, kann auf unterschiedliche Weise erfolgen. Beispielsweise kann das Charakterisieren der Oberflächentopographie optisch erfolgen. Alternativ oder zusätzlich kann das Charakterisieren der Oberflächentopographie auch das mechanische Abtasten der Oberfläche des Greifobjektes umfassen.

Beispielsweise kann das Charakterisieren der Oberflächentopographie das Aufnehmen wenigstens eines Abbildes zumindest eines Teilbereichs der Oberfläche des Greifobjektes mittels einer Kamera umfassen. Insbesondere kann das wenigstens eine Abbild anschließend mittels Methoden der Bildverarbeitung analysiert werden, bspw. um das wenigstens eine Topographie-Merkmal zu ermitteln.

Das Wiederauffinden des Referenzbereichs, insbesondere des wenigstens einen Topographie-Merkmals, kann dann beispielsweise das Aufnehmen von Abbildern verschiedener Teilbereiche der Oberfläche des Greifobjekts und das Vergleichen dieser Abbilder mit dem zuvor aufgenommenen Abbild des zumindest einen Teilbereichs der Oberfläche des Greifobjekts umfassen.

Alternativ oder zusätzlich kann das Charakterisieren der Oberflächentopographie, insbesondere das Erfassen des wenigstens einen Topographie-Merkmals, das Abtasten zumindest eines Teilbereichs der Oberfläche des Greifobjekts mittels einer optischen oder mechanischen Abtasteinrichtung, und insbesondere das Erstellen eines Abbildes der Oberfläche, umfassen. Insbesondere kann das wenigstens eine Abbild anschließend mittels Methoden der Bildverarbeitung analysiert werden, bspw. um das wenigstens eine Topographie-Merkmal zu ermitteln.

Im Rahmen einer vorteilhaften Weiterbildung kann die Handhabungsanlage außerdem eine Steuereinrichtung mit einer nicht-flüchtigen Datenspeichereinrichtung aufweisen. Das Charakterisieren der Oberflächentopographie in dem Referenzbereich kann dann beispielsweise das Abspeichern eines Referenz-Datensatzes in der nicht-flüchtigen Datenspeichereinrichtung umfassen, wobei der Referenz-Datensatz eine Oberflächentopographie, insbesondere das wenigstens eine Topographie-Merkmal, in dem Referenzbereich und insbesondere dessen Position und Orientierung in einem Koordinatensystem der Handhabungsanlage repräsentiert. Das Wiederauffinden des Referenzbereichs kann dann optional das Abspeichern eines Topographie-Datensatzes in der nicht-flüchtigen Datenspeichereinrichtung und das Vergleichen dieses Topographie-Datensatzes mit dem Referenz-Datensatz umfassen, wobei der Topographie-Datensatz die Oberflächentopographie in zumindest einem charakterisierten Teilbereich der Oberfläche des Greifobjektes repräsentiert.

Im Rahmen einer vorteilhaften Weiterbildung kann das Ermitteln des wenigstens einen Topographie-Merkmals das Ermitteln von Positionsinformationen umfasst, welche eine Position des Topographie-Merkmals in einem Koordinatensystem der Handhabungsanlage oder eine Positions- und/oder Lagebeziehung zwischen dem wenigstens einen Topographie-Merkmal und der Initialposition repräsentieren. Das Ausrichten der Greifvorrichtung beim Wiederaufgreifen des Greifobjektes kann dann in Abhängigkeit der Positionsinformationen erfolgen.

Die Oberflächen-Charakterisierungseinrichtung kann von dem Manipulator und/oder von der Greifvorrichtung separat bereitgestellt sein. In vorteilhafter Weise ist die Oberflächen-Charakterisierungseinrichtung aber ortsfest an der Greifvorrichtung angeordnet. Die hat zum einen den Vorteil, dass die die Oberflächen-Charakterisierungseinrichtung auf einfache Weise zu dem Aufnahmeort mitverlagert werden kann. Darüber hinaus ist auf diese Weise eine Relativposition von Oberflächen-Charakterisierungseinrichtung und Greifpunkt der Greifvorrichtung fixiert, was eine einfache Ausrichtung der Greifvorrichtung relativ zu dem Referenzbereich bzw. dem wenigstens einen Topographie-Merkmal begünstigt. Beispielsweise kann das Wiederauffinden des Referenzbereichs, insbesondere des wenigstens einen Topographie-Merkmals, das Verschieben der Greifvorrichtung und der Oberflächen-Charakterisierungseinrichtung relativ, insbesondere parallel, zu der Oberfläche des Greifobjektes umfassen unter gleichzeitiger Charakterisierung der Oberfläche mittels der Oberflächen-Charakterisierungseinrichtung, vorzugsweise bis sich der Referenzbereich, insbesondere das wenigstens eine Topographie-Merkmal, in einer vorgegebenen Referenzposition relativ zu der Greifvorrichtung befindet.

Um ein schnelles Wiederaufgreifen des Greifobjektes zu ermöglichen, ist es denkbar, dass zum Wiederaufgreifen zunächst eine Grobpositionierung der Greifvorrichtung mittels des Manipulators erfolgt und anschließend eine Feinjustage in Abhängigkeit der Oberflächentopographie erfolgt. Beispielsweise kann das Wiederaufgreifen des Greifobjektes, vor dem Wiederauffinden des Referenzbereichs, insbesondere des wenigstens einen Topographie-Merkmals, das Annähern der Greifvorrichtung an die Initialposition umfassen. Insofern kann das Wiederaufgreifen des Greifobjektes das Positionieren der Greifvorrichtung in eine Näherungsposition (bspw. Offset von wenigen Mikrometern oder Millimetern) relativ zu der Initialposition umfassen. Nach Annähern der Greifvorrichtung an die Initialposition / in dieser Näherungsposition kann dann die Oberflächentopographie charakterisiert werden, um den Referenzbereich, insbesondere das wenigstens eine Topographie-Merkmal wieder aufzufinden. Sodann kann eine Feinjustage der Position der Greifvorrichtung durch Ausrichten der Greifvorrichtung relativ zu dem Referenzbereich bzw. zu dem wenigstens einen Topographie-Merkmal erfolgen.

Es ist denkbar, dass die Initialposition durch Greifpositionskoordinaten charakterisiert ist (können von Anfang an vorgegeben sein, oder nach Kontaktieren oder greifen des Greifobjektes ermittelt worden sein) und der Manipulator, vor dem Wiederauffinden des Referenzbereichs (also vor dem erneuten Charakterisieren der Oberflächentopographie) zunächst auf Basis der Greifpositionskoordinaten angesteuert wird. Im Idealfall wird durch Charakterisieren der Oberflächentopographie festgestellt, dass sich die Greifvorrichtung bereits in einer Position befindet, in welcher sie das Greifobjekt an der Initialposition greifen kann. Dann umfasst das Ausrichten der Greifvorrichtung relativ zu dem Referenzbereich, das Halten der Greifvorrichtung in der aktuellen Position. Bei einer Abweichung der Ist-Position der Greifvorrichtung von der Initialposition kann das Ausrichten der Greifvorrichtung relativ zu dem Referenzbereich das Verlagern der Greifvorrichtung relativ zu dem Greifobjekt umfassen.

Die Greifpositionskoordinaten können Koordinaten (des Kontaktpunktes zwischen Greifvorrichtung und Greifobjekt oder eines Referenzpunkts der Greifvorrichtung) in einem Koordinatensystem der Handhabungsanlage sein. Die Greifpositionskoordinaten können auch Steueranweisungen repräsentieren, auf Basis derer der Manipulator ansteuerbar ist (bspw. x-, y-, z-Werte und/oder Euler-Winkel in einem Koordinatensystem der Handhabungsanlage).

Die eingangs gestellte Aufgabe wird auch durch eine Handhabungsanlage gemäß Anspruch 13 gelöst. Die Handhabungsanlage ist insbesondere zur Ausführung eines der vorstehend beschriebenen Verfahren ausgebildet. Die vorstehend in Bezug auf das Verfahren beschriebenen optionalen Merkmale und Vorteile der Handhabungsanlage können auch zur Ausgestaltung der Handhabungsanlage gemäß Anspruch 13 dienen. Gleichermaßen können die nachfolgend erläuterten Vorteile und optionalen Merkmale der Handhabungsanlage oder deren Komponenten zur Ausgestaltung des Verfahrens gemäß Anspruch 1 dienen.

Die Handhabungsanlage umfasst eine Greifvorrichtung zum Greifen eines Greifobjektes, einen Manipulator zum Verlagern der Greifvorrichtung, eine Oberflächen-Charakterisierungseinrichtung zum Charakterisieren einer Oberflächentopographie des Greifobjektes, und eine Steuereinrichtung zum Ansteuern der Handhabungsanlage.

Der Manipulator kann unterschiedlich ausgebildet sein. Der Manipulator kann als Ein- oder Mehrachssystem ausgebildet sein. Vorzugsweise ist der Manipulator als Roboter ausgebildet.

Die Greifvorrichtung kann unterschiedlich ausgebildet sein. Die Greifvorrichtung kann eine magnetische Greifvorrichtung, insbesondere Magnetgreifer, umfassen. Die Greifvorrichtung kann eine mechanische Greifvorrichtung, insbesondere Fingergreifer oder Klemme, umfassen. Die Greifvorrichtung kann einen Adhäsionsgreifer, insbesondere Gecko-Greifer, umfassen. Die Greifvorrichtung kann auch einen Passivgreifer umfassen. Vorzugsweise umfasst die Greifvorrichtung eine Unterdruckgreifvorrichtung, insbesondere Sauggreifer, weiter insbesondere Flächensauggreifer. Die Greifvorrichtung kann Kombinationen der beschriebenen Greifvorrichtungen umfassen.

Die Steuereinrichtung wirkt insbesondere mit dem Manipulator, dem Endeffektor, und der Oberflächen-Charakterisierungseinrichtung zusammen. Insbesondere ist die Steuereinrichtung dazu eingerichtet, eines der vorstehend beschriebenen Verfahren auszuführen. Vorzugsweise weist die Steuereinrichtung eine nicht-flüchtige Datenspeichereinrichtung auf, auf welcher Steuereinweisungen hinterlegt, insbesondere gespeichert, sind, welche, insbesondere bei Ausführung durch eine Datenverarbeitungsanlage der Steuereinrichtung, die Steuereinrichtung dazu veranlassen, eines der vorstehend beschriebenen Verfahren durchzuführen.

Die Oberflächen-Charakterisierungseinrichtung kann von dem Manipulator entkoppelt sein, insbesondere von dem Manipulator nicht verlagerbar sein. Vorzugsweise ist die Oberflächen-Charakterisierungseinrichtung mit der Greifvorrichtung bewegungsgekoppelt. Die Oberflächen-Charakterisierungseinrichtung und die Greifvorrichtung können insofern gemeinsam von dem Manipulator verlagerbar sein. Besonders vorteilhaft ist es, wenn die Oberflächen-Charakterisierungseinrichtung ortsfest an der Greifvorrichtung und somit ortsfest relativ zu einem Greifpunkt der Greifvorrichtung (d.h. einer Stelle der Greifvorrichtung, an der sie das Greifobjekt greifen kann, bspw. eine Saugstelle im Falle eines Sauggreifers) angeordnet ist. Dies erleichtert ein Ausrichten der Greifvorrichtung relativ zu dem Referenzbereich bzw. relativ zu dem wenigstens einen Topographie-Merkmal (siehe oben).

Die vorstehend genannte Aufgabe wird auch durch einen Endeffektor gemäß Anspruch 15 gelöst. Der Endeffektor umfasst eine Greifvorrichtung zum Greifen eines Greifobjekts und eine, insbesondere ortsfest relativ zu der Greifvorrichtung angeordnete, Oberflächen-Charakterisierungseinrichtung zum Charakterisieren einer Oberflächentopographie des Greifobjektes.

Vorzugsweise umfasst der Endeffektor außerdem eine Kopplungseinrichtung, insbesondere Roboterflansch, zum Ankoppeln des Endeffektors an einen Manipulator, insbesondre Roboter.

Die vorstehend im Zusammenhang mit der Handhabungsanlage beschriebenen Vorteile und optionalen Merkmale der Greifvorrichtung und der Oberflächen-Charakterisierungseinrichtung können auch zur Ausgestaltung des Endeffektors gemäß Anspruch 15 dienen.

Wie vorstehend erwähnt, kann die Oberflächen-Charakterisierungseinrichtung unterschiedlich ausgebildet sein. Die Oberflächen-Charakterisierungseinrichtung dazu ausgebildet sein, ein Abbild der Oberfläche des Greifobjektes aufzunehmen. Insbesondere kann die Oberflächen-Charakterisierungseinrichtung eine oder mehrere Kameras aufweisen. Die Oberflächen-Charakterisierungseinrichtung kann auch dazu ausgebildet sein, eine Welligkeit und/oder Rauheit der Oberfläche des Greifobjektes zu ermitteln. Dies kann beispielsweise dadurch realisiert sein, dass die Oberflächen-Charakterisierungseinrichtung eine optische oder mechanische Abtasteinrichtung (bspw. AFM-Spitze oder sonstige Tastspitze) aufweist. Die Oberflächen-Charakterisierungseinrichtung kann auch eine Laser-Scanvorrichtung, ein Konfokalmikroskop und/oder ein Weißlicht-Interferometer zum Ermitteln einer Welligkeit und/oder Rauheit aufweisen. Die Oberflächen-Charakterisierungseinrichtung kann Kombinationen der vorstehend beschriebenen Technologien umfassen.

Die Erfindung wird im Folgenden anhand der Figuren näher erläutert.

Es zeigen:
Fig. 1 vereinfachte schematische Darstellung einer Ausgestaltung einer Handhabungsanlage;
Fig. 2 vereinfachte schematische Darstellung eines Endeffektors gemäß einer ersten Ausgestaltung;
Fig. 3 vereinfachte schematische Darstellung eines Endeffektors gemäß einer zweiten Ausgestaltung;
Fig. 4 Flussdiagramm zur Erläuterung eines beispielhaften Verfahrens zum Handhaben eines Greifobjekts mit der Handhabungsanlage gemäß Fig. 1; und
Fig. 5 bis 8 vereinfachte schematische Darstellungen zur Erläuterung beispielhafter Oberflächentopographien und deren Charakterisierung.

In der nachfolgenden Beschreibung sowie in den Figuren sind für identische oder einander entsprechende Merkmale jeweils dieselben Bezugszeichen verwendet.

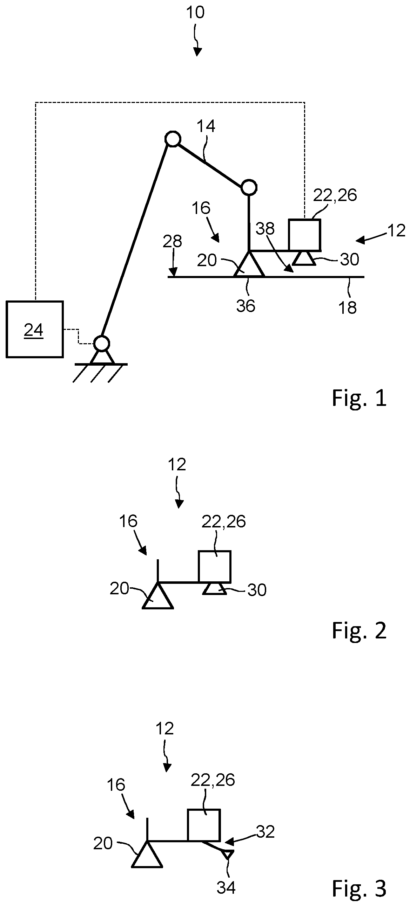

Die Figur 1 zeigt in vereinfachter schematischer Darstellung eine beispielhafte Ausgestaltung einer Handhabungsanlage, welche insgesamt mit dem Bezugszeichen 10 bezeichnet ist.

Die Handhabungsanlage 10 umfasst einen Endeffektor 12 und einen Manipulator 14 zum Verlagern des Endeffektors 12. Der Endeffektor 12 ist mit dem Manipulator 14 verbunden, beispielsweise über eine Kopplungseinrichtung (nicht gesondert dargestellt).

Der Endeffektor 12 weist eine Greifvorrichtung 16 zum Greifen eines Greifobjektes 18 (lediglich beispielhaft als Blech dargestellt) auf. Die Greifvorrichtung 16 ist im Beispiel als Sauggreifer mit einem Saugkörper 20 ausgebildet ist. Bei nicht dargestellten Ausgestaltungen kann der Endeffektor 12 auch andere Greifvorrichtungen 16 (bspw. magnetische, mechanische oder passive) aufweisen.

Der Manipulator 14 (in Figur 1 lediglich schematisch dargestellt) ist vorzugsweise als Roboter ausgebildet. Beispielsweise kann der Manipulator 14 ein 6-Achs-Roboter sein. Es ist auch möglich, dass der Manipulator 14 lediglich eine angetriebene Achse, bspw. Linearachse, aufweist.

Die Handhabungsanlage 10 umfasst außerdem eine Oberflächen-Charakterisierungseinrichtung 22 zum Charakterisieren einer Oberflächentopographie des Greifobjektes 18. Beispielhaft ist die Oberflächen-Charakterisierungseinrichtung 22 Teil des Endeffektors 12 und insbesondere ortsfest zu der Greifvorrichtung 16 angeordnet. Bei nicht dargestellten Ausgestaltungen kann die Oberflächen-Charakterisierungseinrichtung 22 aber auch von dem Endeffektor 12 separat bereitgestellt sein, bspw. über eine separate Verbindungseinrichtung mit dem Manipulator 14 verbunden sein.

Die Handhabungsanlage 10 umfasst außerdem eine Steuereinrichtung 24 zum Ansteuern der Handhabungsanlage 10. Die Steuereinrichtung 24 ist insbesondere dazu ausgebildet, den Manipulator 14 und optional die Greifvorrichtung 16 und die Oberflächen-Charakterisierungseinrichtung 22 anzusteuern. Wie vorstehend erwähnt, umfasst die Steuereinrichtung 24 vorzugsweise eine nicht-flüchtige Datenspeichereinrichtung (nicht dargestellt), auf welcher Steueranweisungen für die Steuereinrichtung 24 hinterlegt sind.

Wie vorstehend erläutert, kann die Oberflächen-Charakterisierungseinrichtung 22 unterschiedlich ausgebildet sein. Insbesondere umfasst die Oberflächen-Charakterisierungseinrichtung 22 eine Erfassungseinheit 26 zum Erfassen einer Oberfläche 28 des Greifobjektes 18. Die Oberflächen-Charakterisierungseinrichtung 22 kann außerdem eine Auswerteeinheit (nicht gesondert dargestellt) zum Auswerten von Signalen der Erfassungseinheit 26 aufweisen. Die Auswerteeinheit kann auch Teil der Steuereinrichtung 24 sein.

Im Beispiel gemäß Figuren 1 und 2 umfasst die Oberflächen-Charakterisierungseinrichtung 22 eine Kamera 30, welche dazu ausgebildet ist, ein Abbild der Oberfläche 28 des Greifobjektes 18 oder zumindest eines Teilbereichs der Oberfläche 28 aufzunehmen.

Die Figur 3 zeigt eine weitere beispielhafte Ausgestaltung, bei der die Oberflächen-Charakterisierungseinrichtung 22 eine Abtasteinrichtung 32 umfassend eine Tastspitze 34 zum Abtasten der Oberfläche 28 aufweist.

Wie vorstehend erwähnt, kann die Oberflächen-Charakterisierungseinrichtung 22 auch andere oder zusätzliche Erfassungseinheiten 26 umfassen.

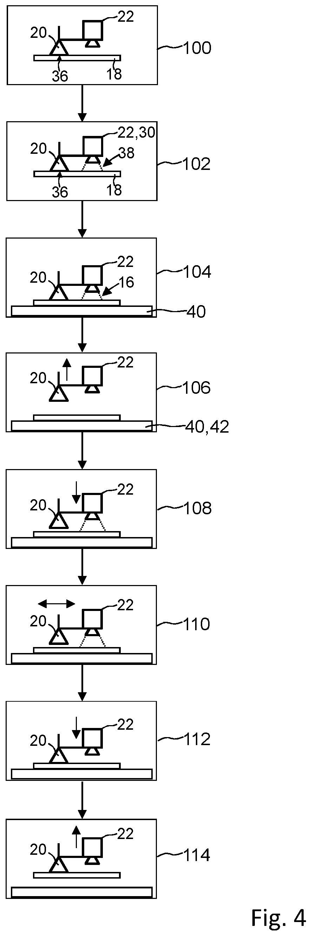

Im Folgenden wird unter Bezugnahme auf die Figur 4 ein beispielhaftes Verfahren zum Handhaben eines Greifobjektes 18 mittels der Handhabungsanlage 10 beschrieben. Das Verfahren ist aber nicht auf die konkrete Ausgestaltung der Handhabungsanlage 10 gemäß Figur 1 beschränkt.

In einem ersten Schritt (Block 100 in Figur 4) wird das Greifobjekt 18 mittels der Greifvorrichtung 16 an einer Initialposition 36 gegriffen (bspw. um das Greifobjekt 18 aus einem Lagerort zu entfernen). Zu diesem Zweck kann die Greifvorrichtung 16 mittels des Manipulators 14 auf das Greifobjekt 18 aufgesetzt werden und sodann das Greifobjekt 18 über den Saugkörper 18 angesaugt werden (in Fig. 4 nicht gesondert dargestellt).

In einem weiteren Schritt (Block 102 in Figur 4) wird eine Oberflächentopographie des Greifobjektes 18 in einem Referenzbereich 36 der Oberfläche 28 des Greifobjektes 18 charakterisiert. Insbesondere wird wenigstens ein charakteristisches Topographie-Merkmal 44 in dem Referenzbereich 38 ermittelt (Details siehe unten). Im Beispiel ist eine Position und Größe des Referenzbereiches 38 durch die Anordnung der Kamera 30 relativ zu der Greifvorrichtung 16, insbesondere dem Saugkörper 20, und das Aufnahmefeld der Kamera 30 bestimmt. Bei Ausgestaltungen mit Abtasteinrichtung 32 kann beispielsweise eine Größe des Analysebereiches vorgegeben und somit ein Referenzbereich 38 definiert sein (bspw. 2x2mm).

In einem weiteren Schritt (Block 104 in Figur 4) wird das Greifobjekt 18 zu einem gewünschten Ablageort 40 (bspw. einem Lagerort oder eine Bearbeitungsstation einer Bearbeitungsmaschine) verlagert und dort abgesetzt.

Wie vorstehend erwähnt, kann das Charakterisieren der Oberflächentopographie vor, während und/oder nach einer Verlagerung des Greifobjektes 18 zu dem Ablageort erfolgen.

In einem weiteren Schritt (Block 106 in Figur 4) wird die Greifvorrichtung 16 sodann von dem Greifobjekt 16 getrennt.

Soll das Greifobjekt 18 zu einem späteren Zeitpunkt wieder aufgenommen werden, wird der Endeffektor 12 wieder an den aktuellen Ablageort des Greifobjektes 18 (kann dem vorherigen Ablageort 40 entsprechend oder ein von diesem verschiedener Aufnahmeort 42 sein) gefahren und erneut die Oberfläche 28 des Greifobjektes 18 oder zumindest ein Teilbereich hiervon mittels der Oberflächen-Charakterisierungseinrichtung 22 untersucht, um den Referenzbereich 36 oder das wenigstens eine Topographie-Merkmal 44 wiederzufinden (Block 108 in Figur 4). Der Referenzbereich 38 bzw. das wenigstens eine Topographie-Merkmal 44 dient dabei das Referenzpunkt, um die Greifvorrichtung 16 derart relativ zu dem Greifobjekt 18 auszurichten, dass diese das Greifobjekt 18 wieder an der Initialposition 36 greifen kann (im Beispiel der Saugkörper 20 wieder an der Initialposition 36 positioniert ist).

Wie vorstehend beschrieben, ist es beispielsweise denkbar, dass der Endeffektor 12 zunächst in eine Näherungsposition zu der Initialposition verfahren wird, insbesondere ohne das Greifobjekt 18 mit der Greifvorrichtung 16 zu kontaktieren (vgl. Block 108 in Figur 4), und in dieser Näherungsposition eine Charakterisierung der Oberflächentopographie erfolgt.

Das Wiederauffinden des Referenzbereichs 36 und das Ausrichten der Greifvorrichtung 16 relativ zu dem Greifobjekt 18 kann zeitgleich erfolgen. Beispielsweise kann der Endeffektor 12 zum Ausrichten parallel zur Oberfläche 28 des Greifobjektes 18 verlagert werden (vgl. Block 110 in Figur 4, dort durch den Doppelpfeil beispielhaft dargestellt) und dabei die Oberfläche 28 mittels der Oberflächen-Charakterisierungseinrichtung 22 charakterisiert werden, bis sich der Endeffektor 12 wieder in der gleichen Relativposition zu dem Referenzbereich 36 bzw. dem wenigstens einen Topographie-Merkmal 44 befindet wie beim vorherigen Greifen.

Es ist auch denkbar, dass zunächst die Oberfläche 28 mittels der Oberflächen-Charakterisierungseinrichtung 22 charakterisiert wird, um den Referenzbereich 38 bzw. das wenigstens eine Topographie-Merkmal 44 wiederzufinden und die Greifvorrichtung 16 danach relativ zu dem (wiederaufgefundenen) Referenzbereich 38 bzw. Topographie-Merkmal 44 ausgerichtet wird, sodass die Greifvorrichtung 16 das Greifobjekt 18 wieder an der Initialposition 36 greifen kann (im Beispiel der Saugkörper 20 wieder an der Initialposition 36 positioniert ist).

Ist der Endeffektor 12 entsprechend ausgerichtet, wird der Endeffektor 12 wieder auf das Greifobjekt 18 abgesetzt und das Greifobjekt 18 mittels der Greifvorrichtung 16 gegriffen (vgl. Block 112 in Figur 4) und optional weiter verlagert (Block 114 in Figur 4).

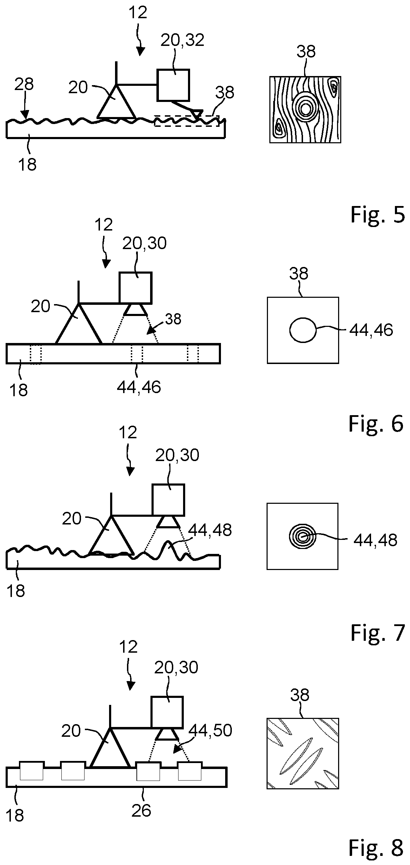

Im Folgenden werden unter Bezugnahme auf die Figuren 5 bis 8 beispielhafte Oberflächentopographien des Greifobjektes 18 und Verfahren zu deren Charakterisierung erläutert.

Wie vorstehend erwähnt, kann das Charakterisieren der Oberflächentopographie insbesondere das Erkennen einer Gestaltabweichung der Oberfläche 28 des Greifobjektes 18 umfassen. Beispielsweise kann der Referenzbereich 38 durch eine Welligkeit oder Rauheit der Oberfläche 28 in diesem Bereich charakterisiert sein.

Die Figur 5 zeigt eine beispielhafte Ausgestaltung, bei der das Greifobjekt 18 eine Holz-Maserung und somit eine charakteristische Welligkeit und Rauheit an der Oberfläche 28 aufweist. Das Charakterisierung der Oberflächentopographie in dem Referenzbereich 38 kann insofern das Ermitteln einer Welligkeit oder Rauheit in dem Referenzbereich 38 umfassen. Dies kann beispielsweise optisch oder - wie in Figur 5 beispielhaft dargestellt - mittels einer mechanischen Abtasteinrichtung 32 erfolgen.

Es ist auch denkbar, dass das Charakterisieren der Oberflächentopographie in dem Referenzbereich 38 das Erfassen eines charakteristischen Topographie-Merkmals 44 der Oberfläche 28 in dem Referenzbereich 38 umfasst. Das Ausrichten der Greifvorrichtung 16 im Zuge des Wiederaufgreifens des Greifobjektes 18 kann dann in Abhängigkeit einer Position des Topographie-Merkmals 44 erfolgen. Beispielsweise ist es denkbar, dass zum Ausrichten der Greifvorrichtung 16 der Endeffektor 12 parallel zu der Oberfläche 28 des Greifobjektes 18 verlagert wird, bis sich das Topographie-Merkmal 44 in einer vorgegebenen Referenzposition relativ zu dem Endeffektor 12 befindet. Insbesondere kann während der Verlagerung die Oberfläche 28 mittels der Oberflächen-Charakterisierungseinrichtung 22 nach dem Topographie-Merkmal 44 abgesucht werden.

Es ist denkbar, dass das Topographie-Material 44 direkt mittels der Oberflächen-Charakterisierungseinrichtung 22 erfasst wird. Es ist auch denkbar, dass zunächst die gesamte Oberflächentopographie in dem Referenzbereich 38 charakterisiert wird und aus den so gewonnenen Charakterisierungs-Daten das Topographie-Merkmal 44 datentechnisch ermittelt wird (bspw. mittels Methoden der Bildverarbeitung).

Bei dem Topographie-Merkmal 44 handelt es sich insbesondere um eine lokale Formabweichung der Oberfläche 28 des Greifobjektes 18.

Beispielhaft zeigt die Figur 6 zeigt eine Ausgestaltung, bei der das Greifobjekt 18 ein solches Topographie-Merkmal 44 in Form eines Durchgangslochs 46 aufweist. Das Charakterisieren der Oberflächentopographie in dem Referenzbereich 38 kann insofern das optische Erfassen des Durchgangslochs 46 umfassen, bspw. in dem mittels einer Kamera 30. Wie vorstehend erwähnt, ist es denkbar, dass ein Abbild des Referenzbereichs 38 aufgenommen wird und anschließend eine Position und Lage des Durchgangslochs 46 mittels Methoden der Bildverarbeitung ermittelt wird. Beispielsweise kann ein Topographie-Datensatz, insbesondere Bild-Datensatz, welcher das Abbild der Oberfläche 28 in dem Referenzbereich 38 repräsentiert, in einer nicht-flüchtigen Datenspeichereinrichtung der Auswerteeinheit der Oberflächen-Charakterisierungseinrichtung 22 oder der Steuereinrichtung 24 gespeichert werden, und diese Topographie-Daten mittels Methoden der Bildverarbeitung analysiert werden.

Die Figur 7 zeigt eine weitere beispielhafte Ausgestaltung eines Topographie-Merkmals 44 in Form einer lokalen Erhebung 48. Das Erfassen der lokalen Erhebung kann grundsätzlich wie vorstehend zu Figur 5 beschrieben erfolgen.

Die Figur 8 zeigt eine weitere beispielhafte Ausgestaltung eines Topographie-Merkmals 44 in Form eines Oberflächenmusters 50, welches- im Beispiel - durch eine Oberflächenstruktur eines Riffelblecks bzw. Tränenblechs gebildet ist. Ein solches Oberflächenmuster kann bspw. wieder optisch (z.B. mittels einer Kamera 30) erfolgen.

## Patentansprüche

1. Verfahren zum Handhaben eines Greifobjektes (18) mittels einer Handhabungsanlage (10), umfassend
- eine Greifvorrichtung (16) zum Greifen des Greifobjektes (18),
- einen Manipulator (14) zum Verlagern der Greifvorrichtung (16), und
- eine Oberflächen-Charakterisierungseinrichtung (22) zum Charakterisieren einer Oberflächentopographie des Greifobjektes (18),
das Verfahren umfassend:
- Kontaktieren, insbesondere Greifen, des Greifobjektes (18) an einer Initialposition mittels der Greifvorrichtung (16);
- Charakterisieren einer Oberflächentopographie des Greifobjektes (18) in einem Referenzbereich (38) der Oberfläche (28) des Greifobjektes (18) mittels der Oberflächen-Charakterisierungseinrichtung (22);
- Ablegen des Greifobjektes (18) an einem Ablageort (40);
- Wiederaufgreifen des Greifobjektes (18), umfassend
o Wiederauffinden des Referenzbereichs durch erneutes Charakterisieren der Oberflächentopographie in zumindest einem Teilbereich der Oberfläche des Greifobjekts mittels der Oberflächen-Charakterisierungseinrichtung;
o Ausrichten der Greifvorrichtung (12) in Abhängigkeit des wiederaufgefundenen Referenzbereichs, um das Greifobjekt an der gleichen Greifposition wie die Initialposition aufzugreifen;
o Greifen des Greifobjekts (18) mittels der Greifvorrichtung (16).

2. Verfahren nach Anspruch 1, wobei das Charakterisieren der Oberflächentopographie das Ermitteln einer Welligkeit der Oberfläche (28) des Greifobjektes (18) in dem Referenzbereich (38) umfasst.

3. Verfahren nach einem der Ansprüche 1 oder 2, wobei das Charakterisieren der Oberfläche das Ermitteln einer Rauheit der Oberfläche (28) des Greifobjektes (18) in dem Referenzbereich (38) umfasst.

4. Verfahren nach einem der vorherigen Ansprüche, wobei das Charakterisieren der Oberflächentopographie in dem Referenzbereich (38) das Ermitteln wenigstens eines Topographie-Merkmals (44) in dem Referenzbereich (38) umfasst, wobei das Wiederaufgreifen des Greifobjektes (18) das Wiederauffinden des wenigstens einen Topographie-Merkmals (44) und das Ausrichten der Greifvorrichtung (16) relativ zu dem wenigstens einen Topographie-Merkmal (44) umfasst.

5. Verfahren nach dem vorherigen Anspruch, wobei es sich bei dem wenigstens einen Topographie-Merkmal (44) um eine lokale Formabweichung der Oberflächengestalt des Greifobjektes (18) handelt.

6. Verfahren nach einem der Ansprüche 4 oder 5, wobei es sich bei dem wenigstens einen Topographie-Merkmal (44) um eine lokale Aussparung oder Ausnehmung, insbesondere Durchgangsloch (46) oder Durchbruch, in dem Greifobjekt (18) handelt.

7. Verfahren nach einem der Ansprüche 4 oder 5, wobei es sich bei dem wenigstens einen Topographie-Merkmal (44) um eine lokale Erhebung (48) an der Oberfläche (28) des Greifobjektes (18) handelt.

8. Verfahren nach einem der Ansprüche 4 oder 5, wobei es sich bei dem wenigstens einen Topographie-Merkmal (44) um ein Oberflächenmuster (50) des Greifobjektes (18) handelt.

9. Verfahren nach einem der vorherigen Ansprüche, wobei das Charakterisieren der Oberflächentopographie, insbesondere das Ermitteln des wenigstens einen Topographie-Merkmals (44), das Aufnehmen eines Abbildes zumindest eines Teilbereichs der Oberfläche (28) des Greifobjektes (18) mittels einer Kamera (30) und das anschließende Analysieren des Abbildes mittels Methoden der Bildverarbeitung umfasst.

10. Verfahren nach einem der vorherigen Ansprüche, wobei das Charakterisieren der Oberflächentopographie, insbesondere das Erfassen des wenigstens einen Topographie-Merkmals (44), das Abtasten zumindest eines Teilbereichs der Oberfläche (28) des Greifobjektes (18) mittels einer optischen oder mechanischen Abtasteinrichtung (32) umfasst.

11. Verfahren nach dem vorherigen Anspruch, wobei das Ermitteln des wenigstens einen Topographie-Merkmals (44) das Ermitteln von Positionsinformationen umfasst, welche eine Position des wenigstens einen Topographie-Merkmals (44) in einem Koordinatensystem der Handhabungsanlage oder eine Positions- und/oder Lagebeziehung zwischen dem wenigstens einen Topographie-Merkmal (44) und der Initialposition (36) repräsentieren, wobei das Ausrichten der Greifvorrichtung (16) beim Wiederaufgreifen des Greifobjektes (18) in Abhängigkeit der Positionsinformationen erfolgt.

12. Verfahren nach einem der vorherigen Ansprüche, wobei das Wiederaufgreifen des Greifobjektes (18) - vor dem Wiederauffinden des Referenzbereichs, insbesondere des wenigstens einen Topographie-Merkmals - das Annähern der Greifvorrichtung (16) an die Initialposition (36) umfasst.

13. Handhabungsanlage (10), insbesondere zur Ausführung eines Verfahrens nach einem der vorherigen Ansprüche, umfassend
- eine Greifvorrichtung (16) zum Greifen eines Greifobjekts (18);
- einen Manipulator (14) zum Verlagern der Greifvorrichtung (16);
- eine Oberflächen-Charakterisierungseinrichtung (22) zum Charakterisieren einer Oberflächentopographie des Greifobjektes (18);
- eine Steuereinrichtung (24) zum Ansteuern der Handhabungsanlage (10), insbesondere welche dazu ausgebildet ist, das Verfahren nach einem der vorherigen Ansprüche auszuführen.

14. Handhabungsanlage (10) nach dem vorherigen Anspruch, wobei die Oberflächen-Charakterisierungseinrichtung (22) mit der Greifvorrichtung (16) bewegungsgekoppelt ist.

15. Endeffektor (12) zur Verwendung in einer Handhabungsanlag (10), umfassend eine Greifvorrichtung (16), insbesondere Sauggreifer, zum Greifen eines Greifobjektes (18) und eine, insbesondere ortsfest an der Greifvorrichtung (16) angeordnete, Oberflächen-Charakterisierungseinrichtung (22) zum Charakterisieren einer Oberflächentopographie des Greifobjektes (18).

16. Handhabungsanlage nach einem der Ansprüche 13 oder 14, oder Endeffektor nach Anspruch 15, wobei die Oberflächen-Charakterisierungseinrichtung (22) eine Kamera und/oder eine optische oder mechanische Abtasteinrichtung (34) zum Abtasten einer Oberfläche (28) des Greifobjektes (18) umfasst.
